# EUROPÄISCHE PATENTSCHRIFT

(11) **EP 1 692 147 B1**
(45) Veröffentlichungstag und Bekanntmachung des Hinweises auf die Patenterteilung: **28.10.2009**
(21) Anmeldenummer: 04803459.9
(22) Anmeldetag: 02.12.2004
(51) Int. Cl.: C07F 7/18

(54) **VERFAHREN ZUR HERSTELLUNG VON ISOCYANATOORGANOSILANEN**
METHOD FOR PRODUCING ISOCYANATE-ORGANOSILANES
PROCEDE DE PRODUCTION D'ISOCYANATO-ORGANOSILANES

(30) Priorität: 11.12.2003 DE 10358064
(43) Veröffentlichungstag der Anmeldung: 23.08.2006
(73) Patentinhaber: Wacker Chemie AG, 81737 München (DE)
(72) Erfinder: RÜDINGER, Christoph, 82319 Starnberg (DE); EBERLE, Hans-Jürgen, 81477 München (DE)
(74) Vertreter: Fränkel, Robert
(86) Internationale Anmeldenummer: PCT/EP2004/013722
(87) Internationale Veröffentlichungsnummer: WO 2005/055974

(56) Entgegenhaltungen:
- EP-A- 1 484 331
- WO-A-02/50020
- DE-C1- 10 108 543
- FITZER, ERICH; FRITZ, WERNER: "Hochschultext; Technische Chemie" 1975, SPRINGER-VERLAG , BERLIN, HEIDELBERG, NEW YORK , XP002330070 Kapitel 14.3.2 Fliessbettreaktoren Seite 450 - Seite 458

## Beschreibung

Die Erfindung betrifft ein Verfahren zur Herstellung von Isocyanatoorganosilan mit fluidisierten Feststoffpartikeln in einem Wirbelbett.

Es besteht seit geraumer Zeit ein großes Interesse an einer wirtschaftlichen Methode zur Herstellung von Isocyanatoorganosilanen in hohen Ausbeuten und Reinheiten. Die genannten Verbindungen sind von hoher wirtschaftlicher Bedeutung, da sie beispielsweise industriell als Haftvermittler zwischen organischen Polymeren und anorganischen Materialien (sog. adhesion promoter, coupling agents, crosslinker) eingesetzt werden.

Zur Herstellung werden dabei Verfahren bevorzugt, bei denen von wenig gefährlichen oder gänzlich ungefährlichen Edukten ausgegangen wird, um so die Handhabung und Durchführung zu erleichtern. Bei den bisher eingesetzten Verfahren werden Isocyanatoorganosilane jedoch in relativ geringen Mengen und in wenig effizienten und teuren Prozessen hergestellt.

So werden beispielsweise bei dem in US 6,008,396 beschriebenen Verfahren Carbamatoorganosilane in inerten heißen Medien unter Abspaltung von Alkohol in die Isocyanate umgewandelt. Dieser Prozess kann jedoch nur semi-kontinuierlich betrieben werden, da die Konzentration an Verunreinigungen im Medium bereits nach kurzer Zeit in einer Art und weise ansteigt, dass die gewünschte Reinheit des Produktes nicht mehr gewährleistet ist.

Bei dem in US 3,598,852 beschriebenen Verfahren werden Carbamatoorganosilane im Vakuum verdampft und das gebildete Isocyanatosilan kontinuierlich abdestilliert.

Bei dem in EP 1010704 A2 beschriebenen Verfahren werden Carbamatoorganosilane in flüssiger Phase thermisch unter Katalyse von Sn(II)-Chlorid zu den entsprechenden Isocyanatoorganosilanen gespalten. Als nachteilig bei diesem Prozess erweist sich insbesondere das sehr aufwendige Verfahren zur Isolierung und Reinigung der gewünschten Produkte, was in der Folge zu niedrigen Ausbeuten führt und somit für eine großtechnische Umsetzung uninteressant erscheint.

Aus EP 649850 B1 ist die thermische Spaltung (Thermolyse) von Carbamatoorganosilanen in der Gasphase unter Normal- oder reduziertem Druck bekannt. Die durch dieses Verfahren erhältlichen Ausbeuten, insbesondere an Isocyanatomethylorganosilanen, sind jedoch unter den dort beschriebenen Bedingungen unbefriedigend.

Bei allen aus dem Stand der Technik bekannten Verfahren stellt sich jedoch das Problem, dass sich kontinuierlich feste Ablagerungen bestehend aus den Produkten der thermischen Carbamatzersetzung in den Reaktionsräumen bilden.

Es bestand daher die Aufgabe ein Verfahren zur Herstellung von Isocyanatoorganosilanen durch thermische Zersetzung (Thermolyse) von Carbamatoorganosilanen bereitzustellen, das die Bildung solcher Ablagerungen weitgehend vermeidet.

Die Aufgabe wird dadurch gelöst, dass die Thermolyse in Gegenwert fluidisierter Feststoffpartikel erfolgt.

Gegenstand der Erfindung ist ein Verfahren zur Herstellung von Isocyanatoorganosilanen durch Thermolyse von Carbamatoorganosilanen in Gegenwart fluidisierter Feststoffpartikel.

Eine bevorzugte Ausführungsform des erfindungsgemäßen Verfahrens ist ein Verfahren zur Herstellung von Isocyanatoorganosilanen durch Thermolyse von Carbamatoorganosilanen in der Gasphase in Gegenwart fluidisierter Feststoffpartikel.

Mit dem erfindungsgemäßen Verfahren werden nicht nur hohe Ausbeuten und Selektivitäten bei der Herstellung der gewünschten Produkte, sondern auch lange Betriebszeiten der Reaktionseinheiten, insbesondere des Verdampfers und/oder des Reaktors, ohne dass es zu Blockierungen durch Ablagerungen kommt, bei gleichzeitig niedrigen Betriebskosten erreicht.

Werden Carbamatoorganosilane in hohen Konzentrationen in der flüssigen Phase einer lange anhaltenden thermischen Belastung ausgesetzt, wie es beim Erwärmen und Verdampfen in konventionellen Apparaten wie Kesselverdampfern, Rohrbündelwärmetauschern, Rohrbündelumlaufverdampfern, Dünnschichtverdampfern unvermeidlich ist, laufen eine Vielzahl von unerwünschten Zersetzungsreaktionen der Carbamatoorganosilane ab. Die Zersetzungsreaktionen schmälern nicht nur die mögliche Ausbeute an gewünschten Isocyanatosilanen, sondern führen auch nach kurzer Zeit zur Verlegung der Apparate durch Ablagerungen mit hohen Wartungs- und Instandhaltungskosten. Des weiteren stellen die unbeabsichtigt ablaufenden Zersetzungsreaktionen ein Sicherheitsrisiko dar, da die Zersetzungsreaktionen sich durch Wärmefreisetzung soweit beschleunigen können, dass es in großen, konventionellen Apparaten zu einer thermischen Explosion des Einsatzgutes kommen kann. Aufgrund der kürzeren Verweilzeit, geringeren Überhitzung der flüssigen Phase und großen Oberfläche der fluidisierten Partikel können bei der erfindungsgemäßen Durchführung des Verfahrens mit fluidisierten Partikeln die genannten Nachteile vermieden werden. Darüber hinaus können bei der erfindungsgemäßen Durchführung des Verfahrens mit fluidisierten Partikeln die sich überwiegend auf den Partikeln bildenden Ablagerungen ohne besonderen Aufwand entfernt werden und somit ein lange andauernder störungsfreier Anlagenbetrieb gewährleistet werden.

Das erfindungsgemäße Verfahren kann grundsätzlich in Anwesenheit oder Abwesenheit eines oder mehrerer homogener und/oder heterogener Katalysatoren durchgeführt werden.

In einer bevorzugten Ausführungsform des erfindungsgemäßen Verfahrens werden Isocyanatoorganosilane der allgemeinen Formel (1)

R²R³R⁴Si-R¹-N=C=O (1),

wobei
**R** einen einwertigen C₁-C₁₀-Alkylrest,
**R¹** einen zweiwertigen C₁-C₆-Kohlenwasserstoffrest und
**R², R³** und **R⁴** jeweils unabhängig voneinander einen Methyl-, Ethyl-, n-Propyl-, i-Propyl-, Methoxy-, Ethoxy-, n-Propoxy- oder i-Propoxyrest bedeuten,
durch Thermolyse von Carbamatoorganosilanen der allgemeinen Formel (2)

R²R³R⁴Si-R¹-NH-CO-OR (2),

in Gegenwart fluidisierter Feststoffpartikel hergestellt.

In einer besonders bevorzugten Ausführungsform erfolgt die Umsetzung von Carbamatoorganosilanen der allgemeinen Formel (2) zu Isocyanatoorganosilanen der allgemeinen Formel (1) in der Gasphase.

Bei dem Verfahren werden aus den Carbamatoorganosilanen, insbesondere solchen der allgemeinen Formel (2), durch Thermolyse Alkohole der allgemeinen Formel ROH abgespalten, insbesondere Methanol, Ethanol, Propanol, Butanol, Isobutanol, Pentanol, Hexanol, Isohexanol, Cyclohexanol und 2-Ethylhexanol. Bevorzugt werden Methanol und Ethanol, besonders bevorzugt Methanol, abgespalten.

Mit dem erfindungsgemäßen Verfahren lassen sich generell auch bislang nur schwer und in mäßigen Ausbeuten erhältliche Isocyanatoorganosilane enthaltend kurzkettige Spacer zwischen dem Si-Atom und der Isocyanat-Funktion herstellen, insbesondere solche Isocyanatoorganosilane der allgemeinen Formel (1), in denen **R¹** für Methylen steht,

Als Spacer **R¹** zwischen der Organosilylgruppe und der Carbamatogruppe können generell lineare oder verzweigte gesättige oder ungesättige C₁-C₆-Kohlenwasserstoffgruppen eingesetzt werden. Bevorzugte Spacer **R¹** sind Alkylreste, insbesondere lineare Alkylreste, besonders bevorzugt werden Methylen, Ethylen und Propylen eingesetzt.

**R², R³** und **R⁴** sind vorzugsweise Methyl-, Methoxy-, Ethoxy-, n-Propoxy- oder i-Propoxyreste.

Nach dem erfindungsgemäßen Verfahren können insbesondere Verbindungen der allgemeinen Formel (1), bei denen
R², R³ = Methoxy, R⁴ = Methyl und R¹ = Methylen; oder
R² = Methoxy, R³ = Ethoxy, R⁴ = Methyl und R¹ = Methylen; oder
R², R³ = Ethoxy, R⁴ = Methoxy und R¹ = Methylen; oder
R², R³ = Methoxy, R⁴ = Ethoxy und R¹ = Methylen bedeuten,
in hohen Ausbeuten und Reinheiten hergestellt werden.

Als fluidisierte Feststoffpartikel sind Partikel aus allen Stoffen die unter den Reaktionsbedingungen zumindest zeitweise in einer festen Phase vorliegen geeignet.

In einer vorteilhaften Ausführungsform des erfindungsgemäßen Verfahrens bestehen 1% bis 100%, insbesondere 10 bis 50%, der fluidisierten Feststoffpartikel aus einem oder einer Kombination mehrerer heterogener Katalysatoren. In einer besonders vorteilhaften Ausführungsform des erfindungsgemäßen Verfahrens bestehen die fluidisierten Feststoffpartikel aus einem Material, das ohne Zersetzung in Gegenwart von Sauerstoff, insbesondere von Luft, auf mehr als 250°C, insbesondere auf mehr als 450°C, erhitzt werden kann. Ein besonders geeignetes Material sind demnach nichtflüchtige Metalloxide und oxidationsbeständige Keramiken.

Die optimale Partikelgröße hängt sehr stark von der Reaktorausführung und den Materialeigenschaften der Partikel ab. Die Partikel müssen einerseits klein genug sein, um bei den Reaktorbedingungen fluidisiert zu werden und andererseits groß genug sein, um im Reaktionssystem zu verbleiben und nicht ausgetragen zu werden.

Üblicherweise wird die Partikelgröße zwischen 1*10⁻⁶ m und 1 * 10⁻² m, vorteilhaft zwischen 5*10⁻⁵ m und 5*10⁻³ m und besonders vorteilhaft zwischen 1*10⁻⁴ m und 1*10⁻³ m, liegen.

Die Partikel müssen abriebfest genug sein, um einen unökonomisch hohen Partikel-Verbrauch durch Partikelverkleinerung zu vermeiden.

Katalytisch aktive Partikel können direkt in das Reaktionssystem eingebracht werden oder alternativ erst im Reaktionssystem gebildet werden, insbesondere durch Umwandlung einer Katalysatorvorstufe (Präkatalysatoren) in den Katalysator oder Beschichtung inerter fluidisierter Partikel mit katalytisch aktiven Verbindungen im Reaktionssystem. Auch können die fluidisierten Partikel mit Katalysatormaterial getränkt werden. Ebenso kann auch der Katalysator erst im Reaktionssystem aus Katalysatorvorstufen (Präkatalysatoren) gebildet werden.

Die Partikel und/oder der heterogene Katalysator und/oder Vorläuferverbindungen der Partikel und/oder der heterogenen Katalysatoren können als Lösung, Sol, Gel, Emulsion, Suspension, Schmelze, Dampf oder Feststoff dem Reaktionssystem absatzweise oder kontinuierlich, gemischt mit dem Edukt oder getrennt vom Edukt an einer oder verschiedenen Stellen des Reaktionssystems zugeführt werden.

Das Verfahren wird vorteilhaft so durchgeführt, dass absatzweise oder kontinuierlich frische Partikel und/oder Katalysator zugeführt werden und dafür ein entsprechender Anteil verbrauchter Partikel und/oder Katalysator aus dem Reaktionssystem ausgeschleust wird.

Das Verfahren wird in einer bevorzugten Ausführungsform so durchgeführt, dass der Katalysator, die Katalysatorvorläuferverbindungen oder Partikelvorläuferverbindungen in löslicher Form vorliegen. Der homogene Katalysator, eine oder mehrere lösliche Katalysatorvorläuferverbindunen oder eine oder mehrere lösliche Partikelvorläuferverbindungen werden dann entweder gelöst im Edukt dem Reaktionssystem zugegeben oder als getrennte Lösung absatzweise oder kontinuierlich dem Reaktionssystem zugeführt.

In einer alternativen Ausführungsform können der Katalysator, die Partikel, die Katalysatorvorläuferverbindungen oder Partikelvorläuferverbindungen im Falle unlöslicher Katalysatoren und/oder Partikel und/oder Katalysatorvorläuferverbindungen und/oder Partikelvorläuferverbindungen in emulgierter oder suspendierter Form vorliegen und dem Edukt vor dem Eintritt in das Reaktionssystem absatzweise oder kontinuierlich zugeführt werden.

Das erfindungsgemäße Verfahren kann optional in Gegenwart eines Katalysators durchgeführt werden. Als Katalysatoren kommen grundsätzlich homogene und heterogene Katalysatoren gleichermaßen in Betracht.

Geeignete homogene Katalysatoren sind eine oder mehrere Verbindungen ausgewählt aus der Gruppe enthaltend lösliche Zinn-, Blei-, Cadmium-, Antimon-, Wismut-, Titan-, Zirkonium-, Niob-, Eisen-, Kobalt-, Mangan-, Chrom-, Molybdän-, Wolfram-, Nickel-, Kupfer- und Zinkverbindungen sowie lösliche organische Stickstoffbasen.

Insbesondere eignen sich 1,4-Diazabicyclo(2,2,2)oktan, Dibutylzinndilaurat, Dibutylzinnmaleat, Dibutylzinndiacetat und Dimethylzinndichlorid.

Als heterogene Katalysatoren können allgemein Metalle und/oder Verbindungen enthaltend Elemente ausgewählt aus der Gruppe Sn(I), Sn(II), Pb(II), Zn(II), Cu(I), Cu(II), Co(I), Co(II), Na, K, Li, Rb, Cs, Sr, Ba, Mg, Ca, Cr, Mo, Ti, V, W, Ce, Fe, Ni, Si, Al, Ge, Ga, In, Sc, Y, La, Lanthanide, Pd, Pt, Co, Rh, Cu, Ag, Au, Zn, Cd, N, B, C, und deren Mischungen und Legierungen enthaltend die vorgenannten Elemente verwendet werden.

Bevorzugte heterogene Katalysatoren sind Oxide, Hydroxyde, Hydroxid-oxide, Mischoxide, Acetate, Formiate, Oxalate, Tartrate, Citrate, Nitrate, Carbonate oder Mischungen der vorgenannten Verbindungen eines oder mehrere Elemente ausgewählt aus der Gruppe enthaltend Sn(I), Sn(II), Pb(II), Zn(II), Cu(I), Cu(II), Co(I), Co(II), Na, K, Li, Rb, Cs, Sr, Ba, Mg, Ca, Cr, Mo, Ti, V, W, Ce, Fe, Ni, Si, Al, Ge, Ga, In, Sc, Y, La, Lanthanide, Pd, Pt, Rh, Cu, Ag, Au und Cd.

Insbesondere eignen sich heterogene Katalysatoren enthaltend eine oder mehrere Verbindungen ausgewählt aus der Gruppe enthaltend TiO₂, ZrO₂, HfO₂, Al₂O₃, BaO, CaO, MgO, CeO₂, La₂O₃, Y₂O₃, Sm₂O₃, Yb₂O₃, Cr₂O₃, ZnO, V₂O₄, MnO₂, NiO, In₂O₃, Ga₂O₃, GeO₂, FeO, Fe₂O₃, Fe₃O₄, CuO, Co₃O₄, Fe(MoO₄)₃, MgO/CsOH, MgO/NaOH, Aluminosilicate, insbesondere Zeolithe in unterschiedlichen Porengrößen, Cordierit der Zusammensetzung 2 MgO * 2 Al₂O₃ * 5 SiO₂, Heteropolysäuren, Kohlenstoffmodifikationen, z. B. Graphit, Übergangsmetallnitride, -boride, -silicide und-carbide.

Diese Metalle, Metallverbindungen oder deren Mischungen können auch auf poröse oder unporöse Trägermaterialien aufgebracht werden. Besonders geeignete Träger aus inerten refraktorischen Materialien sind oxidische und nichtoxidische Keramik, SiO₂, Kohlenstoff, Alumosilikate, Magnesium-Alumosilikate oder beständige metallische Werkstoffe, insbesondere Glaswolle, Quarzwolle, Keramiken, oxidischen Massen, wie SiO₂, Al₂O₃, Fe₂O₃, oder Steatit.

Die Katalysatorträger können dabei in Form unregelmäßiger Granulate, Kugeln, Ringe, Halbringe, Sättel, Zylinder, Trilobs oder Monolithe eingesetzt werden.

Das Verfahren wird allgemein in für Reaktionen mit fluidisierten Feststoffpartikeln geeigneten Reaktoren durchgeführt, insbesondere solchen, in denen Partikel fluidisiert werden können und die gleichzeitig das Austragen von Partikeln aus dem Reaktor verhindern. Geeignete Reaktoren mit verschiedenen Formen fluidisierter Feststoffe wie eine Wirbelschicht, expandierte Wirbelschichten oder zirkulierenden Wirbelschichten sind z.B. die Reaktoren für die Methylchlorsilan-Direktsynthese in der Wirbelschicht, das Wirbelschicht-Cracken von Erdölfraktionen oder "Riser/Regenerator"-Reaktoren wie sie z.B. für das "Fluidized Catalyst Cracking" verwendet werden (s. z.B. "Ullmannn's Encyclopedia of Industrial Chemistry", Vol. B4 "Fluidized-Bed Reactors").

Als Material für den Reaktor sind chemisch beständige Materialien, insbesondere Glas, Keramik oder Metalle, geeignet.

Entsprechend der Reaktionstemperatur erfolgt die Energiezufuhr des Reaktors und/oder des Reaktionssystems und/oder die Erhitzung der fluidisierten Partikel vorteilhaft mit Wasserdampf, Thermoöl, flüssigen oder dampfförmigen synthetischen Wärmeträgern, flüssigen Salzmischungen, flüssigen Metallegierungen, heißen Gasen, elektrischer Widerstandsheizung oder Mikrowellenheizung. In einer bevorzugten Ausführungsform des erfindungsgemäßen Verfahrens erfolgt die Energiezufuhr mittels Mikrowellenstrahlung.

Unter dem Begriff "Mikrowellen" sind dabei elektromagnetische Schwingungen mit einer Frequenz von 300 MHz bis 300 GHz zu verstehen.

Der Reaktionsraum kann frei oder mit Einbauten versehen sein. Die Einbauten beeinflussen die Strömungs-, Temperatur- und im Falle von Mikrowellenheizung auch die Mikrowellenverteilung im Reaktionsraum. Die Einbauten können in diesem Fall aus mikrowellentransparentem Material wie mikrowellentransparenten Gläsern, Quarzglas, mikrowellentransparenter oxydischer Keramik, mikrowellentransparenter nichtoxydischer Keramik bestehen und beeinflussen dann nur die Fluidströmung im Reaktionsraum. Bestehen die Einbauten aus mikrowellenreflektierendem Material (z.B. gut leitfähige Metalle, Graphit) oder mikrowellenabsorbierenden Materialien (spezielle Keramiken, Siliziumcarbid, magnetische Werkstoffe oder elektrische Widerstandsmaterialien) wird auch die Mikrowellen- und Temperaturverteilung beeinflusst.

In den Reaktionsraum kann bei optionaler Durchführung des erfindungsgemäßen Verfahrens in Gegenwart eines Katalysators zusammen mit den Einbauten oder alleine einer oder mehrere der oben angeführten heterogenen Katalysatoren eingebracht sein oder kontinuierlich eingebracht werden.

Der Reaktionsraum kann auch so ausgebildet werden, dass der gesamte Reaktionsraum oder ein Teil des Reaktionsraumes mit einem fluidisierten Feststoff gefüllt ist, wobei der Feststoff als Mikrowellenabsorber, Wärmeträger und/oder Katalysator wirken kann.

Zur allgemeinen Gestaltung von Mikrowellenbestrahlungssystemen sei an dieser Stelle auch auf Literatur wie A. Mühlbauer, "Industrielle Elektrowärmetechnik", Essen Vulkan-Verlag, 1992; D. M. P. Mingos, "The Application of Microwaves to the Processing of Inorganic Materials", British Ceramic Transactions, 91, 1992; G. Orth, "Mikrowellenerwärmung in der Industrie" RWE-Industrieforum, Essen, 1993 verwiesen.

Das Verfahren kann absatzweise (Batch-Betrieb), semi-kontinuierlich oder kontinuierlich durchgeführt werden. Bevorzugt ist das kontinuierliche Abziehen eines oder mehrerer flüchtiger Reaktionsprodukte aus dem Reaktionsraum, kontinuierliche Abdestillieren eines oder mehrerer flüchtiger Reaktionsprodukte aus dem Reaktionsraum, wobei sowohl das Reaktionsprodukt Alkohol als auch das Reaktionsprodukt Isocyanatoorganosilan separat oder zusammen abdestilliert werden können.

Verbrauchte fluidisierte Feststoffe, wobei unter der Bezeichnung "verbraucht" allgemein Material zu verstehen ist, das sich in seinen Eigenschaften soweit vom Ausgangszustand verändert hat, dasses für den Prozess nicht mehr geeignet ist, insbesondere deaktivierte Katalysatorpartikel, agglomerierte Partikel, zerkleinerte Partikel, können kontinuierlich oder absatzweise aus dem Reaktionssystem ausgeschleust, ersetzt und/oder regeneriert werden. Dabei können alle oder ein Teil der entnommenen Partikel und Katalysatoren regeneriert werden.

Das Carbamatoorganosilan, insbesondere eines der allgemeinen Formel (2), wird bevorzugt in einem Temperaturbereich des fluidisierten Feststoffes von 150-800°C, besonders bevorzugt zwischen 200-600°C und insbesondere in einem Bereich von 250-500°C, erhitzt.

Das Verfahren kann mit oder ohne Trägergas durchgeführt werden. Das Trägergas wird dabei ausgewählt aus der Gruppe enthaltend Stickstoff, Wasserstoff, Luft, Edelgas, wie Helium, Argon oder Dämpfe kohlenstoffhaltiger Stoffe wie Kohlenmonoxid, Kohlendioxid, Methan, Oktan, Toluol, Dekalin, Tetralin oder Mischungen eines oder mehrererder vorgenannten Gase. Die als Trägergas fungierende Komponente kann auch in flüssiger Form zugegeben werden und wird dann erst in der beheizten Zone unter Bildung eines Gasstromes verdampft. Mittels des Trägergases kann erreicht werden, die Reaktionsmischung zu verdünnen, zu heizen oder zu kühlen, Feststoffe zu fluidisieren und/oder zu transportieren und definierte Strömungsverhältnisse einzustellen.

Das Verfahren wird bevorzugt in einem Druckbereich von 0.01*10⁵ Pa - 200*10⁵ Pa, besonders bevorzugt bei 0.5*10³ Pa - 40*10⁵ Pa durchgeführt.

Das Edukt wird in dem erfindungsgemäßen Verfahren vorzugsweise über Verdüsung in das Reaktionssystem eingebracht.

Das erfindungsgemäße Verfahren wird dabei bevorzugt so ausgeführt, dass in eine Zone, die mit Beheizungseinrichtungen versehen ist und in der die Partikel mit einem Gasstrom vorfluidisiert sind, über Düsen fein verteilt das Edukt oder Eduktgemisch enthaltend einen oder mehrere Katalysatoren oder Katalysatorvorläuferverbindungen zudosiert wird. Die durch die Verdampfung gebildeten Dämpfe führen zu einer starken Zunahme des Gasstromes und einer zusätzlichen Fluidisierung der Partikel. Die Edukt-Verdüsungseinrichtung wird in einer bevorzugten Ausführungsform zusätzlich gekühlt.

Das erfindungsgemäße Verfahren birgt gegenüber den aus dem Stand der Technik bekannten Verfahren den großen Vorteil, dass die gewünschten Produkte in einem einfachen nachgelagerten Destillationsschritt in hoher Reinheit (>97 %) gewonnen werden können. Die Bildung der bei hohen thermischen Belastungen beobachteten sechsgliedrigen Isocyanurate wird durch das vorliegende Verfahren praktisch vollständig vermieden.

Ein besonderer Vorteil des Verfahrens liegt darin, dass die Reaktorteile, auf denen sich üblicherweise verkokte und/oder verkieselte Ablagerungen bilden, insbesondere Reaktorwände, Verdampfungs- und Heizoberflächen, durch die fluidisierten Partikel kontinuierlich gereinigt werden und verkokte und verkieselte Partikel ohne Prozessunterbrechung ausgeschleust und ersetzt bzw. regeneriert werden können.

Die Regenerierung der Partikel kann bei Temperaturen von 150-800°C, bevorzugt zwischen 200-600°C, besonders bevorzugt in einem Bereich von 400-500°C und bei einem Druck von 0.01*10⁵ Pa - 100 *10⁵ Pa, besonders bevorzugt bei 0.5*10⁵ Pa - 10*10⁵ Pa, durchgeführt werden.

Zur Regenerierung können die Partikel mit reaktiven Gasen, Flüssigkeiten oder Feststoffen kontaktiert werden. Besonders bevorzugt ist die Regenerierung mit sauerstoffhaltigen Gasen, insbesondere mit Luft oder Magerluft (Luft / Stickstoffgemisch), wobei die Partikel vorzugsweise in einem fluidisierten Zustand vorliegen. Der Sauerstoffgehalt im Reaktionsraum der Regeneration liegt bevorzugt unter der Sauerstoffgrenzkonzentration um das Risiko von Explosionen einzuschränken.

In einer bevorzugten Ausführungsform werden die Partikel in einer Wirbelschicht bei 450°C und 1.5*10⁵ Pa mit Luft regeneriert.

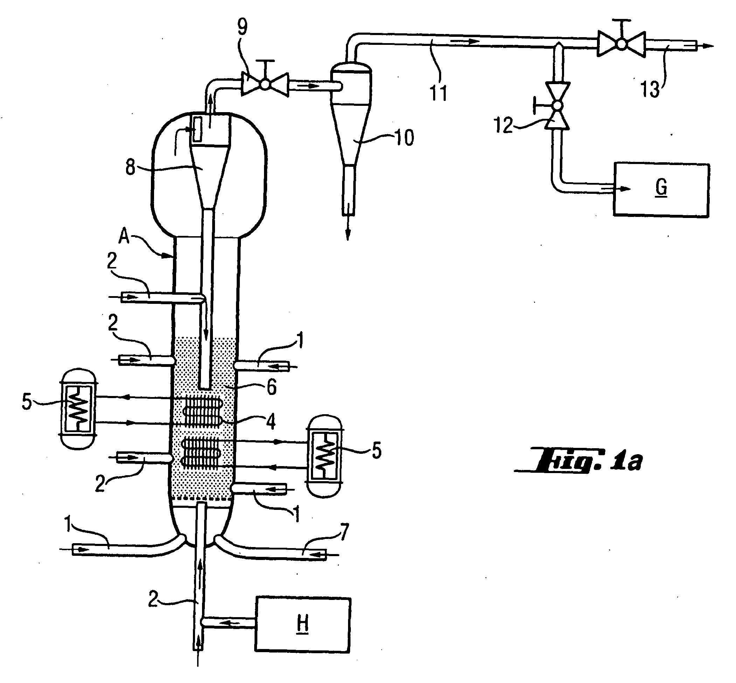

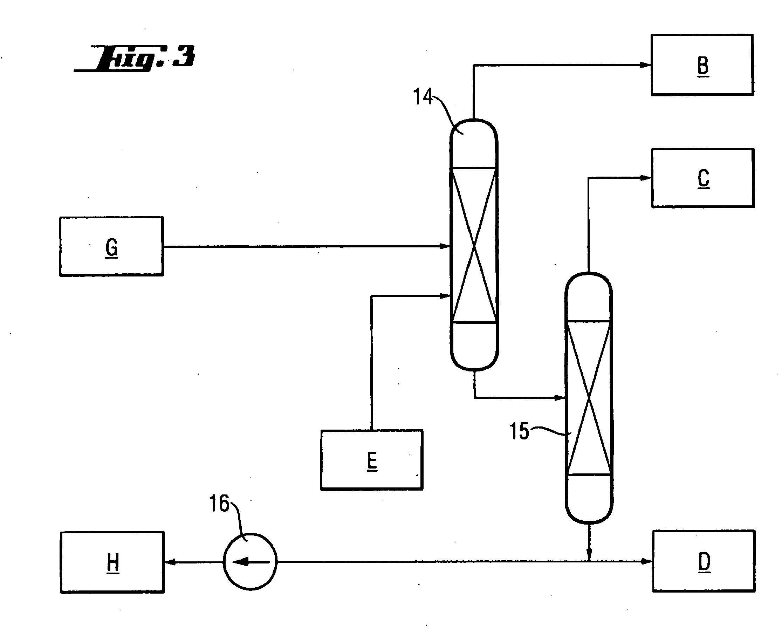

Figur 1a beschreibt eine mögliche Ausführungsform und Vorrichtung zur Durchführung des erfindungsgemäßen Verfahrens mit Wirbelschicht und absatzweiser (im Batch-Betieb erfolgender) Regeneration: Über die Leitungen (1) wird dem Reaktionssystem Trägergas zugeführt. Über eine oder mehrere der Leitungen (2) gelangt das Edukt (H) (Carbamatoorganosilan) in das Reaktionssystem und wird in die wirbelschicht (6) verdüst. In der Wirbelschicht (6) liegen Heizelemente (4), die von den Reaktorheizungen (5) beheizt werden und die Reaktionstemperatur aufrechterhalten und regulieren. Das Reaktionsgas verlässt den Reaktor (A) über den Zyklon (8), der Partikel (fluidisierte Feststoffpartikel) abscheidet und in die Wirbelschicht (6) zurückführt. Der Reaktordruck wird mit dem Ventil (9) reguliert. Im Zyklon (10) werden nochmals Feinstaubanteile abgeschieden. Über die Leitung (11) gelangt das Reaktoraustrittsgas (Reaktionssgas) enthaltend das Rohprodukt (G) zur Aufarbeitung gemäß Figur 3.

Bei der absatzweisen Regeneration wird über die Leitungen (2) kein weiteres Edukt mehr zugeführt und zunächst der Reaktor (A) mit Inertgas über Leitung (1) gespült und anschließend ein sauerstoffhaltiges Gas über Leitung (7) in den heißen Reaktor (A) geführt. Das Ventil (12) wird geschlossen und das bei der Regeneration anfallende Gas über Leitung (13) abgeblasen.

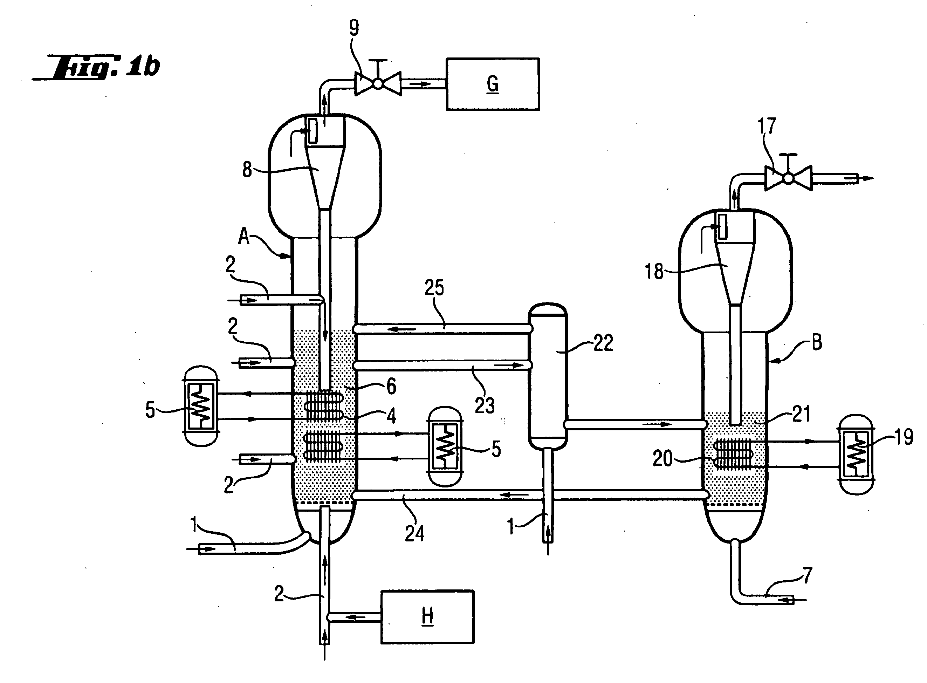

Figur 1b beschreibt eine mögliche Ausführungsform und Vorrichtung zur Durchführung des erfindungsgemäßen Verfahrens mit Wirbelschicht und kontinuierlicher Regeneration: Über die Leitungen (1) wird dem Reaktionssystem Trägergas zugeführt. Über eine oder mehrere der Leitungen (2) gelangt das Edukt (H) (Carbamatoorganosilan) in das Reaktionssystem und wird in die Wirbelschicht (6) verdüst. In der Wirbelschicht (6) liegen Heizelemente (4), die von den Reaktorheizungen (5) beheizt werden und die Reaktionstemperatur aufrechterhalten und regulieren. Das Reaktionsgas verlässt den Reaktor (A) über den Zyklon (8), der Partikel (fluidisierte Feststoffpartikel) abscheidet und in die Wirbelschicht (6) zurückführt. Der Reaktordruck wird am Ventil (9) reguliert. Das sich dem Ventil (9) anschließende Verfahren bzw. die mögliche Vorrichtung zur Isolierung des Produktes aus dem Reaktoraustrittsgas enthaltend das Rohprodukt (G) (Isocyanatoorganosilan) entspricht demjenigen, welches unten bei Figur 3 beschrieben wird.

Dem Reaktor wird über Leitung (23) kontinuierlich ein Teil der Feststofffüllung entnommen. Der Feststoff wird im Stripper (22) von anhaftenden flüchtigen Edukten und Produkten befreit und in den Regenerator (B) überführt. Die Strippgase werden über Leitung (25) ins Reaktionssystem zurückgeführt. Der Regenerator (B) wird über vorgewärmtes sauerstoffhaltiges Regeneriergas, das über Leitung (7) zugeführt wird, und/oder eine Heizung (20) und (19) in der Wirbelzone beheizt. Die dem Reaktor (A) entnommenen Partikel werden in der Wirbelschicht (21) des Regenerators (B) mit einem sauerstoffhaltigen Gas behandelt und über Leitung (24) kontinuierlich in den Reaktor (A) zurückgeführt. Der Zyklon (18) trennt Partikel vom Regeneriergas und führt sie in die Regenerationswirbelschicht (21) zurück. Das Ventil (17) reguliert den Regenerationsdruck im Regenerator (B).

Figur lc beschreibt eine mögliche Ausführungsform und Vorrichtung zur Durchführung des erfindungsgemäßen Verfahrens mit zirkulierender Wirbelschicht (Riser) und Regenerator: Über die Leitungen (1) wird dem Reaktionssystem Trägergas zum Reaktorsteigrohr (27), zum Standrohr (28) und zum Stripper (22) zugeführt. Über Leitung (2) gelangt das Edukt (H) (Carbamatoorganosilan) zum Reaktor (A) und wird am unteren Ende des Steigrohres (27) des Reaktors (A) in die über Leitung (29) - aus dem analog zu Figur 1b kontinuierlich arbeitenden Regenerator (B) - zu- bzw. zurückgeführten Partikel (fluidisierte Feststoffpartikel) verdüst. Partikel und Gasstrom steigen gemeinsam durch das über eine oder mehrere Heizungen (4/5) beheizte Steigrohr des Reaktors (A) auf. Im Zyklon (8) werden die Partikel vom Reaktionsgas getrennt und über das Standrohr (28) und die Leitung (29) zum Reaktoreingang zurückgeführt. Der Reaktordruck wird über Ventil (9) reguliert. Das sich dem Ventil (9) anschließende Verfahren und die mögliche Vorrichtung zur Isolierung des Produktes (Isocyanatoorganosilan) aus dem Strom (G) entspricht demjenigen, welches unten bei Figur 3 beschrieben wird. Im Standrohr (28) werden die Partikel von anhaftenden flüchtigen Produkten befreit. Ein Teil der Feststoffüllung des Reaktionssystems wird über Leitung (23) kontinuierlich abgezogen, im Stripper (22) von allen flüchtigen Verbindungen befreit und in der Wirbelschicht (21) des Regenerators (B) mit einem sauerstoffhaltigen Gas behandelt. Die Strippgase werden über Leitung (25) ins Reaktionssystem zurückgeführt. Der Regenerator (B) wird über vorgewärmtes sauerstoffhaltiges Regeneriergas, das über Leitung (7) zugeführt wird, und/oder eine Heizung (20) und (19) in der Wirbelzone (21) beheizt. Die dem Reaktor entnommenen und regenerierten Partikel werden über Leitung (24) und Leitung (29) kontinuierlich in den Reaktor zurückgeführt. Der Zyklon (18) trennt Partikel vom Regeneriergas und führt sie in die Regenerationswirbelschicht (21) zurück. Das Ventil (17) reguliert den Regenerationsdruck.

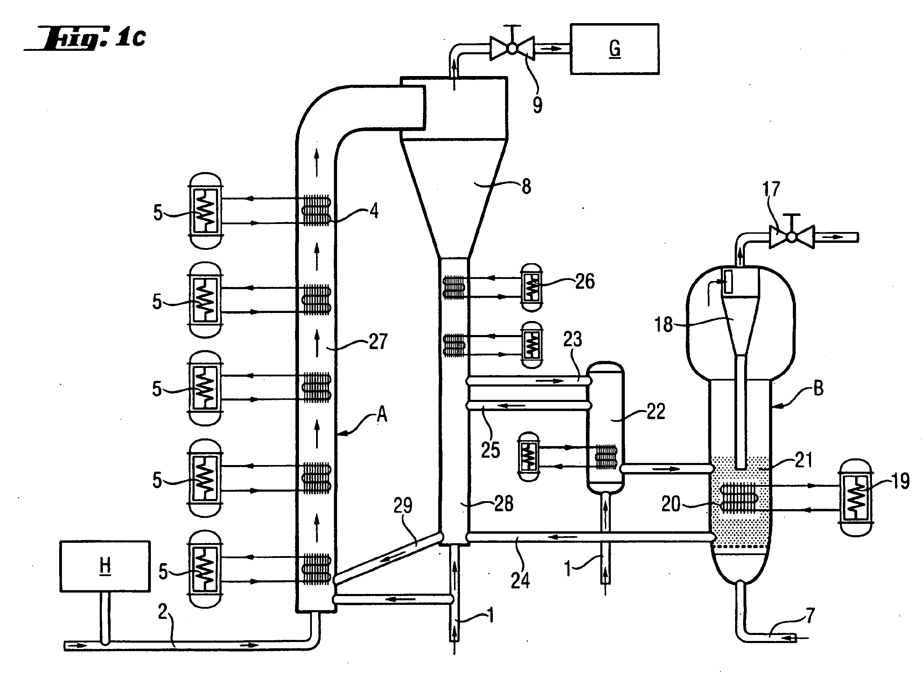

In einer bevorzugten Ausführungsform des erfindungsgemäßen Verfahrens, insbesondere solchen der in den Figuren 1a, 1b und 1c beschriebenen Ausführungsformen kann zur Vervollständigung der Umsetzung der über das Ventil (9) entnehmbare gasförmige Abstrom (G) aus dem Reaktor enthaltend fluidisierte Feststoffpartikel noch in einen oder mehrere nachgeschaltete Reaktoren (Nachreaktoren) geleitet werden.

Das Volumen jedes Folgereaktors kann das 0,1-fache bis 20-fache Volumen, bevorzugt das 0,5 bis 5-fache Volumen, besonders bevorzugt das 1-fache bis 3-fache Volumen, des Hauptreaktors betragen.

Die Folgereaktoren können bei einer Temperatur von 150-800°C, bevorzugt zwischen 200-600°C, besonders bevorzugt in einem Bereich von 400-500°C und bei einem Druck von 0.01*10⁵ - 100*10⁵ Pa, besonders bevorzugt bei 0.5*10⁵ - 10*10⁵ Pa, betrieben werden.

Die Folgereaktoren können Reaktionszonen entsprechend einem vermischten Kessel oder Rohr besitzen. Die Reaktionszonen können mit Rühreinrichtungen, inerten Einbauten z.B. Füllkörperschüttungen, strukturierten Packungen oder Mischerstrukturen versehen sein. Besonders vorteilhaft sind Reaktoren, die mit fluidisierten Partikeln und/oder fluidisierten heterogenen Katalysatorpartikeln oder mit einem fixierten heterogenen Katalysator versehen sind.

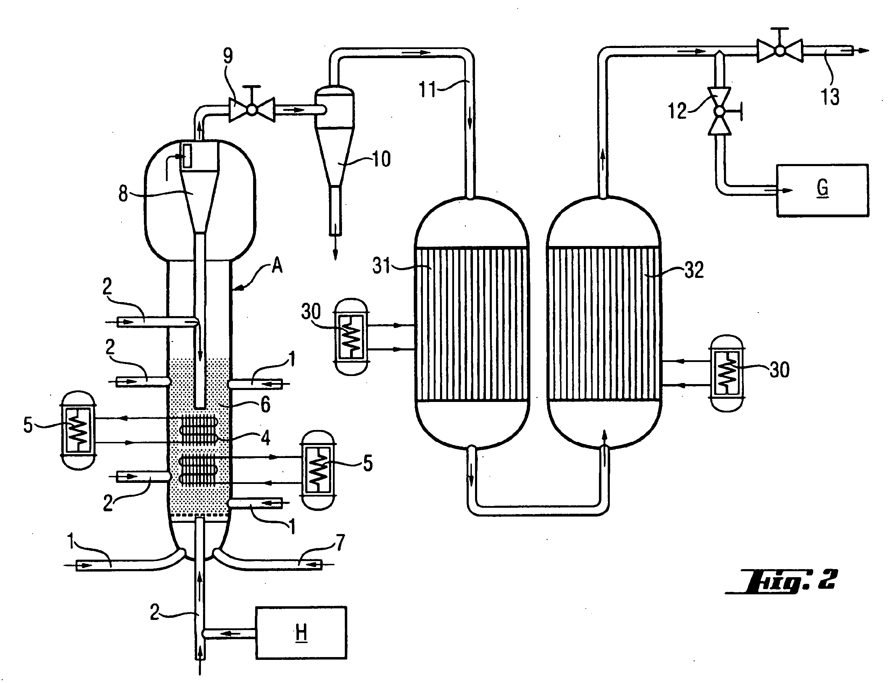

Figur 2 beschreibt ein erfindungsgemäßes Verfahren und eine mögliche Vorrichtung mit Haupt- und Nachreaktor: Das den ersten Reaktor (Hauptreaktor) - beispielsweise einen Reaktor, der gemäß dem in Figur 1a beschriebenen Verfahren ausgestaltet ist - verlassende Reaktionsgas wird über Leitung (11) dem ersten Nachreaktor (31) zugeführt. Im ersten Nachreaktor (31) wird das Reaktionsgas bei einer durch die Heizung (30) festgelegten und regulierten Temperatur und einem durch den natürlichen Druckverlust und das Ventil (12) festgelegten und regulierten Druck weiter umgesetzt. Das Reaktionsgas des ersten Nachreaktors wird dann in dem zweiten Nachreaktor (32) weiter umgesetzt.

Die absatzweise Regeneration erfolgt hierbei analog dem bei Figur 1a beschriebenen Verfahren: So wird über die Leitungen (2) kein weiteres Edukt mehr zugeführt und zunächst der Reaktor (A) mit Inertgas über Leitung (1) gespült und anschließend ein sauerstoffhaltiges Gas über Leitung (7) in den heißen Reaktor (A) geführt. Das Ventil (12) wird geschlossen und das bei der Regeneration anfallende Gas über Leitung (13) abgeblasen.

Figur 3 zeigt allgemein eine Ausführung und Vorrichtung zur erfindungsgemäßen Produktaufarbeitung, die an alle Ausführungsformen gemäß den Figuren 1a, 1b, 1c, 2 angeschlossen werden kann, wobei die Ströme (G) und (H) die jeweiligen Schnittstellen zu den vorgenannten Figuren darstellen. Der das Rohprodukt enthaltende Strom (G) wird in einer Strippkolonne (14) über Kopf von Leichtsiedern und Gasen (B), insbesondere dem bei der Thermolyse abgespaltenen Alkohol; durch Zuführung eines Strippgases (E) befreit. Aus der Strippkolonne (14) wird im Sumpf ein von den Leichtsiedern befreiterstrom in eine nachgeschaltete Kolonne (15) geführt, wobei das reine Isocyanatoorganosilan (C) über Kopf gewonnen und über den Sumpf eine Schwersieder-Mischung, enthaltend nicht umgesetztes Carbamatoorganosilan (D) abgetrennt wird. Dieses kann teilweise oder vollständig, optional nach einer weiteren chemischen oder physikalischen Behandlung oder Aufarbeitung über die Pumpe (16) an den Systemanfang zurückgeführt werden (H).

Der Strom (H) entspricht dabei in allen den in den Figuren 1a, 1b, 1c und 2 dargestellten möglichen Ausführungsformen des erfindungsgemäßen Verfahrens einem aus der Aufarbeitung wiedergewonrienen Carbamatoorganosilan enthaltenden Strom.

Geeignete Strippgase (E) werden allgemein ausgewählt aus der Gruppe enthaltend Stickstoff, Edelgase, Kohlendioxid, niedrigsiedende Kohlenwasserstoffe wie z.B. Methan, Ethan, Propan, Butan, Pentan etc. oder Mischungen mit anderen unter den Strippbedingungen gasförmigen Stoffen die eine oder mehrere dieser Komponenten in Anteilen über 50% enthalten.

### Vergleichsbeispiel 1:

2,1 mol Methylcarbamatopropyltrimethoxysilan wurden innerhalb von 2 h in einem elektrisch beheizten Siedekolben erwärmt und verdampft. Der Dampf wurde in einen elektrisch beheizten, mit Katalysator gefüllten Rohrreaktor mit 25 mm Innendurchmesser geleitet und zu γ-Isocyanatopropyl-trimethoxysilan umgesetzt. Das den Rohrreaktor verlassende Gasgemisch wurde in einem Liebigkühler aus Glas (Länge 200 mm) abgekühlt. Die Temperatur des Rohrreaktors betrug 450°C, bei einem Druck von 1*10⁵ Pa am Systemausgang, nach dem Kühler. Der Rohrreaktor wurde mit einem Katalysator bestehend aus einem mit Magnesiumoxid beschichteten, geradkanaligen Cordieritemonolithen (2 MgO * 2 Al₂O₃ * 5 SiO₂) gefüllt. Ausgehend von 2,1 mol Methylcarbamatopropyltrimethoxysilan wurden im Kondensat nach dem Kühler 1,18 mol γ-Isocyanatopropyl-trimethoxysilan und 0,33 mol unumgesetztes Methylcarbamatopropyltrimethoxysilan gefunden. Das entspricht einer γ-Isocyanatopropyl-trimethoxysilan-Ausbeute von 56% bezüglich eingesetztem Methylcarbamatopropyltrimethoxysilan. Im zur Verdampfung eingesetzten elektrisch beheizten Siedekolben verbleiben 98 g nicht weiter verwertbarer oligomerer und polymerer Rückstände aus der thermisch induzierten Zersetzung des Methylcarbamatopropyltrimethoxysilans.

### Beispiel 1 (Reaktion):

Analog einem Verfahren nach Figur 2 wurde Methylcarbamatopropyltrimethoxysilan mit einer Rate von 16 ml/min in eine Wirbelschicht von 50 g Fe₂O₃-Granulat (55 µm mittlere Partikelgröße) in einem Glasreaktor eindosiert. Die Reaktortemperatur wurde durch Bestrahlung mit Mikrowellen der Frequenz 2,45 GHz und einer Mikrowellenleistung von maximal 800 W auf 250°C geregelt. Die Partikel wurden mit einem Stickstoffstrom von 75 ln/h vorfluidisiert. Die Erwärmung/Verdampfung/Umsetzung des Methylcarbamatopropyltrimethoxysilans in der Wirbelschicht fand bei einem Druck von 1*10⁵ Pa statt. Der den Wirbelschichtreaktor verlassende Dampf wurde, um den Umsatz zu vervollständigen in einen elektrisch beheizten, mit Katalysator gefüllten Rohrreaktor mit 25 mm Innendurchmesser geleitet und weiter zu γ-Isocyanatopropyl-trimethoxysilan umgesetzt. Das den Rohrreaktor verlassende Gasgemisch wurde auf 25°C abgekühlt. Die Temperatur des Rohrreaktors betrug 440°C, bei einem Druck von 1*10⁵ Pa. Der Rohrreaktor wurde mit einem Katalysator bestehend aus einem mit Fe₂O₃-beschichteten, geradkanaligen Cordieritemonolithen (2 MgO * 2 Al₂O₃ * 5 SiO₂) gefüllt. Ausgehend von 4,07 mol Methylcarbamatopropyltrimethoxysilan wurden im Kondensat nach dem Kühler 3,04 mol γ-Isocyanatopropyl-trimethoxysilan und 0,7 mol unumgesetztes Methylcarbamatopropyltrimethoxysilan gefunden. Das entspricht einem Gesamtumsatz an Methylcarbamatopropyltrimethoxysilan von 83 % und einer γ-Isocyanatopropyl-trimethoxysilan-Ausbeute von 75% bezüglich eingesetztem Methylcarbamatopropyltrimethoxysilan.

### Beispiel 2 (Regeneration):

Mit zunehmender Reaktionsdauer und Abscheidung von Zersetzungsprodukten auf den Partikeln verschlechtern sich die Fluidisierungseigenschaften der Partikel.

Verbrauchte Fe₂O₃-Partikel aus dem Beispiel 1 wurden in einem Quarzrohr in einer Wirbelschicht bei 450°C regeneriert. Zur Fluidisierung und Regeneration wurde ein Gasstrom bestehend aus 500 ln/h Luft und 250 ln/h Stickstoff verwendet. Nach einer Regenerationsdauer von 2 h wurden die regenerierten Fe₂O₃-Partikel anstatt frischer Fe₂O₃-Partikel in einem Versuch analog Beispiel l verwendet. Tabelle 1 stellt das mit den regenerierten Partikeln erhaltene Ergebnis demjenigen mit frischen Partikeln gegenüber.

**Tabelle 1**

| Fe₂O₃-Partikel | Umsatz Methylcarbamatopropyltrimethoxysilan | Ausbeute γ-Isocyanatopropyltrimethoxysilan |
|---|---|---|
| Frisch | 83% | 75% |
| Regeneriert | 83% | 73% |

## Patentansprüche

1. Verfahren zur Herstellung von Isocyanatoorganosilanen durch Thermolyse von Carbamatoorganosilanen in Gegenwart fluidisierter Feststoffpartikel.

2. Verfahren nach Anspruch 1, **dadurch gekennzeichnet dass** Isocyanatoorganosilane der allgemeinen Formel (1)
R²R³R⁴Si-R¹-N=C=O (1),
wobei
**R** einen einwertigen C₁-C₁₀-Alkylrest,
**R¹** einen zweiwertigen C₁-C₆-Kohlenwasserstoffrest und
**R², R³** und **R⁴** jeweils unabhängig voneinander einen Methyl-, Ethyl-, n-Propyl-, i-Propyl-, Methoxy-, Ethoxy-, n-Propoxy- oder i-Propoxyrest bedeuten,
durch Thermolyse von Carbamatoorganosilanen der allgemeinen Formel (2)
R²R³R⁴Si-R¹-NH-CO-OR (2),
in Gegenwart fluidisierter Feststoffpartikel hergestellt werden.

3. Verfahren nach Anspruch 1 oder 2, bei dem die Thermolyse in Gegenwart eines Katalysators erfolgt.

4. Verfahren nach einem oder mehreren der Ansprüche 1 bis 3, **dadurch gekennzeichnet, dass** die Feststoffpartikel eine Größe zwischen 1*10⁻⁶ m und 1*10⁻² m aufweisen.

5. Verfahren nach einem oder mehreren der Ansprüche 1 bis 4, **dadurch gekennzeichnet, dass** 1% bis 100% der fluidisierten Feststoffpartikel aus einem oder einer Kombination mehrerer heterogener Katalysatoren bestehen.

6. Verfahren nach einem oder mehreren der Ansprüche 1 bis 5, **dadurch gekennzeichnet, dass** das Edukt über Verdüsung in das Reaktionssystem eingebracht wird.

7. Verfahren nach einem oder mehreren der Ansprüche 1 bis 6, **dadurch gekennzeichnet, dass** die fluidisierten Feststoffpartikel und/oder der Katalysator und/oder Vorläuferverbindungen des Katalysators und/oder der fluidisierten Feststoffpartikel als Lösung, Sol, Gel, Emulsion, Süspension, Schmelze, Dampf oder Feststoff dem Reaktionssystem absatzweise oder kontinuierlich, gemischt mit dem Edukt oder getrennt an einer oder verschiedenen Stellen des Reaktionssystems zugeführt werden.

8. Verfahren nach einem oder mehreren der Ansprüche 1 bis 7, **dadurch gekennzeichnet, dass** die Energiezufuhr des Reaktionssystemsund/oder die Erhitzung der fluidisierten Partikel mit Wasserdampf, Thermoöl, flüssigen oder dampfförmigen synthetischen Wärmeträgern, flüssigen Salzmischungen, flüssigen Metallegierungen, heißen Gasen, elektrischer Widerstandsheizung oder Mikrowellenheizung erfolgt.

9. Verfahren nach einem oder mehreren der Ansprüche 1 bis 8, **dadurch gekennzeichnet, dass** absatzweise oder kontinuierlich frische Partikel und/oder Katalysator zugeführt werden und gleichzeitig ein entsprechender Anteil verbrauchter Partikel aus dem Reaktionssystem ausgeschleust wird.

10. Verfahren nach einem oder mehreren der Ansprüche 1 bis 9, **dadurch gekennzeichnet, dass** der Abstrom aus dem Reaktor enthaltend die Rohprodukte in einen oder mehrere Nachreaktoren geleitet wird.

## Claims

1. Process for preparing isocyanatoorganosilanes by thermolysis of carbamatoorganosilanes in the presence of fluidized solid particles.

2. Process according to Claim 1, **characterized in that** isocyanatoorganosilanes of the general formula (1)
R²R³R⁴Si-R¹-N=C=O (1),
where
**R** is a monovalent C₁-C₁₀-alkyl radical,
**R¹** is a divalent C₁-C₆-hydrocarbon radical and
**R², R³** and **R⁴** are in each case independently of one another a methyl, ethyl, n-propyl, isopropyl, methoxy, ethoxy, n-propoxy or isopropoxy radical,
are prepared by thermolysis of carbamatoorganosilanes of the general formula (2)
R²R³R⁴Si-R¹-NH-CO-OR (2),
in the presence of fluidized solid particles.

3. Process according to Claim 1 or 2, in which the thermolysis takes place in the presence of a catalyst.

4. Process according to one or more of Claims 1 to 3, **characterized in that** the solid particles have a size between 1*10⁻⁶ m and 1*10⁻² m.

5. Process according to one or more of Claims 1 to 4, **characterized in that** 1% to 100% of the fluidized solid particles consist of a catalyst or a combination of a plurality of heterogeneous catalysts.

6. Process according to one or more of Claims 1 to 5, **characterized in that** the starting material is introduced into the reaction system via atomization.

7. Process according to one or more of Claims 1 to 6, **characterized in that** the fluidized solid particles and/or the catalyst and/or precursor compounds of the catalyst and/or of the fluidized solid particles are fed as solution, sol, gel, emulsion, suspension, melt, vapor or solid to the reaction system batchwise or continuously, mixed with the starting material, or separately, at one or various points of the reaction system.

8. Process according to one or more of Claims 1 to 7, **characterized in that** the energy is fed to the reaction system and/or the fluidized particles are heated by steam, thermal oil, liquid or vaporous synthetic heat carriers, liquid salt mixtures, liquid metal alloys, hot gases, electrical resistance heating or microwave heating.

9. Process according to one or more of Claims 1 to 8, **characterized in that,** batchwise or continuously, fresh particles and/or catalyst are fed and simultaneously a corresponding fraction of used particles is ejected from the reaction system.

10. Process according to one or more of Claims 1 to 9, **characterized in that** the effluent stream from the reactor comprising the crude products is passed into one or more post-reactors.

## Revendications

1. Procédé pour la préparation d'isocyanatoorganosilanes par thermolyse de carbamatoorganosilanes en présence de particules solides fluidisées.

2. Procédé selon la revendication 1, **caractérisé en ce qu'**on prépare des isocyanato-organosilanes de formule générale (1)
R²R³R⁴Si-R¹-N=C=O (1)
dans laquelle
**R** représente un radical alkyle monovalent en C₁-C₁₀,
**R¹** représente un radical hydrocarboné divalent en C₁-C₆,
**R², R³** et **R⁴** représentent chacun indépendamment un radical méthyle, éthyle, n-propyle, isopropyle, méthoxy, éthoxy, n-propoxy ou isopropoxy,
par thermolyse de carbamato-organosilanes de formule générale (2)
R²R³R⁴Si-R¹-NH-CO-OR (2)
en présence de particules solides fluidisées.

3. Procédé selon la revendication 1 ou 2, dans lequel la thermolyse s'effectue en présence d'un catalyseur.

4. Procédé selon une ou plusieurs des revendications 1 à 3, **caractérisé en ce que** les particules solides ont une taille comprise entre 1*10⁻⁶ m et 1*10⁻² m.

5. Procédé selon une ou plusieurs des revendications 1 à 4, **caractérisé en ce que** 1 % à 100 % des particules solides fluidisées consistent en un catalyseur hétérogène ou en une association de plusieurs catalyseurs hétérogènes.

6. Procédé selon une ou plusieurs des revendications 1 à 5, **caractérisé en ce que** le produit de départ est introduit par pulvérisation dans le système réactionnel.

7. Procédé selon une ou plusieurs des revendications 1 à 6, **caractérisé en ce que** les particules solides fluidisées et/ou le catalyseur et/ou des composés précurseurs du catalyseur et/ou des particules solides fluidisées sont envoyés sous forme de solution, de sol, de gel, d'émulsion, de suspension, de masse fondue, de vapeur ou de solide au système réactionnel en mode discontinu ou en continu, séparément ou en mélange avec le produit de départ, en un ou plusieurs points du système réactionnel.

8. Procédé selon une ou plusieurs des revendications 1 à 7, **caractérisé en ce que** l'apport d'énergie du système réactionnel et/ou le chauffage des particules fluidisées s'effectue(nt) avec de la vapeur d'eau, de l'huile thermique, des fluides caloporteurs synthétiques liquides ou à l'état de vapeur, des mélanges de sels liquides, des alliages métalliques liquides, des gaz chauds, un chauffage par résistance électrique ou un chauffage par micro-ondes.

9. Procédé selon une ou plusieurs des revendications 1 à 8, **caractérisé en ce que** de nouvelles particules et/ou du nouveau catalyseur sont envoyés par intermittence ou en continu et en même temps une quantité correspondante de particules utilisées est évacuée du système réactionnel.

10. Procédé selon une ou plusieurs des revendications 1 à 9, **caractérisé en ce que** l'effluent sortant du réacteur, contenant les produits bruts, est envoyé dans un ou plusieurs post-réacteurs.
